# EUROPÄISCHE PATENTANMELDUNG

(11) **EP 2 305 727 A1**
(43) Veröffentlichungstag der Anmeldung: **06.04.2011**
(21) Anmeldenummer: 09012545.1
(22) Anmeldetag: 05.10.2009
(51) Int. Cl.: C08G 18/22, C08G 18/70, C09D 175/04

(54) **Neue 2K-PUR-Systeme**

(71) Anmelder: Bayer MaterialScience AG, 51368 Leverkusen (DE)
(72) Erfinder: Schrinner, Marc Claudius, 51103 Köln (DE); Münzmay, Alice, 41539 Dormagen (DE); Dörr, Sebastian, Dr., 40597 Düsseldorf (DE); Melchiors, Martin, Dr., 42799 Leichlingen (DE); Lippemeier, Jürgen, 51147 Köln (DE)

(57) **Zusammenfassung**

Die vorliegende Erfindung bezieht sich auf Alkalimetallsalze der Phosphormolybdänsäure, insbesondere Natriumphosphomolybdat, zur beschleunigten Aushärtung von Polyisocyanaten mit Polyolen und diese enthaltende Polyurethansysteme.

## Beschreibung

Die vorliegende Erfindung bezieht sich auf Alkalimetallsalze der Phosphormolybdänsäure zur beschleunigten Aushärtung von Polyisocyanaten mit Polyolen und diese enthaltende Polyurethansysteme.

Speziell bezieht sich die vorliegende Erfindung auf Katalysatoren zur beschleunigten Aushärtung von Polyisocyanaten mit Polyolen in Gegenwart des Lösungsmittels Wasser (sogenannte wässrige zweikomponentige Polyurethanlacke, 2K-PUR Wasserlacke).

Die Verwendung von Wasser als Lösungsmittel für Lackanwendungen hat in den letzten Jahren stark zugenommen. Umweltaspekte spielen bei der Entwicklung dieser Technik eine entscheidende Rolle. So kann mit dieser Technik die Verwendung organischer Lösungsmittel für die Applikation des Lacks auf das Substrat stark reduziert werden. Damit verbunden ist eine starke Reduktion der Emission den Ozonabbau begünstigender flüchtiger Bestandteile (sogenannte VOCs, volatile organic compounds) und eine Verbesserung der Arbeitsbedingungen für die Anwender. Weiterhin kann auf die Verbrennung der Abluft aus Lackieranlagen weitgehend verzichtet werden, was zu Kosteneinsparungen führt.

Für konventionelle Lacksysteme, d.h. solchen, bei denen organische Lösungsmittel zur Applikation von Lacken auf das zu lackierende Substrat verwendet werden, sind eine Reihe von Katalysatoren beschrieben worden, die die Reaktion von (Poly)-olen mit (Poly)-isocyanaten zu Polyurethanen beschleunigen. Je nach gewünschter Verarbeitungszeit kann ein Katalysator mit jeweils geeigneter Reaktivität gewählt werden, um die gewünschten Lackeigenschaften beschleunigt einzustellen. Zu den typischerweise verwendeten Katalysatoren gehören solche auf der Basis von Zinnverbindungen, insbesondere von Zinn-IV-Verbindungen. Besonders bevorzugt ist dabei Dibutylzinndilaurat, DBTL. Diese Verbindung ist wahrscheinlich der am häufigsten genutzte Katalysator für sogenannte Zwei-Komponenten Polyurethan (2K-PUR) Lackanwendungen. Zinnsalze bzw. Zinnorganische Verbindungen führen zur raschen Reaktion von Isocyanaten mit Alkoholen bzw. Polyolen. Alternativ können auch Wismut- und Zinkverbindungen eingesetzt werden. Diese haben üblicherweise eine längere Topf- und Reaktionszeit im Vergleich zu den Zinnverbindungen. Auch die Verwendung von Zirkon-Chelatverbindungen wie dem Zirkon-(IV)-acetylacetonat ist beschrieben worden. Diese sind unter anderem in Journal of Coatings Technology 2002, 74(930), 31-36 beschrieben worden. Einen aktuellen Überblick über gängige Katalysatoren gibt z.B. Florio in Paint & Coatings Industry 2000, 16, 80. Für die Anwendung in lichtechten Lacken kommen jedoch andere typische Polyurethan Katalysatoren wie z.B. Eisen-(III)-acetylacetonat oder entsprechende Verbindungen des Nickels oder Kobalts nicht in Frage, da diese Katalysatoren in der Regel farbige Komplexe bilden.

Bei der Verwendung von Wasser als Lösungsmittel für Lackanwendungen sind im Gegensatz zu konventionellen, lösungsmittelhaltigen Systemen, weitere Sachverhalte mit zu berücksichtigen. Einen Überblick über diese Problematik wird z.B. von W. Blank in Progress in Organic Coatings 1999, 35, 19 sowie in der WO 98/41322 und der dort zitierten Literatur gegeben.

Bei diesen Lacksystemen muss die relative Reaktionsrate des Isocyanates mit Alkoholen im Vergleich zur Reaktionsrate mit Wasser berücksichtigt werden. Die Reaktion von Isocyanaten mit Wasser führt zur Bildung von Carbaminsäurederivaten, die anschließend zum zugrundeliegenden Amin und Kohlendioxid abreagieren. Das gebildete Kohlendioxid kann sich durch Blasenbildung im Film bemerkbar machen, was die Filmqualität verschlechtert. Die Bildung von Kohlendioxid ist aus diesem Grund unerwünscht. Aus den decarboxylierten Carbaminsäuren wird ein Amin freigesetzt, dass mit freiem Isocyanat zu Harnstoffen abreagieren kann. Die übermäßige Bildung von Harnstoffen wiederum macht sich in einer Verringerung der Topfzeit des Systems und typischerweise in einem Glanzverlust der Oberfläche und einer Verschlechterung der Lackeigenschaften nach dem Lackiervorgang bemerkbar.

Die Reaktion von Isocyanaten mit Wasser ist somit aufgrund der Folgereaktionen und des rapiden Eigenschaftsverlustes unerwünscht. Die Reaktion von Wasser mit Isocyanaten soll also, um eine Verschlechterung der Eigenschaften zu vermeiden, im Vergleich zum nicht katalysierten Lacksystem, nicht bevorzugt sein. Eine Bevorzugung der Reaktion von (Poly)-ol mit der Isocyanatkomponente ist wünschenswert.

Weiterhin haben Katalysatoren des Stands der Technik in aller Regel nur eine endliche Lebensdauer in wässrigen Systemen, d.h. der Katalysator wird durch die Wassereinwirkung mehr oder minder rasch hydrolysiert. Dies gilt in besonderem Masse für die in konventionellen Systemen gerne verwendeten Zinn-(IV)-Verbindungen wie das bereits genannte DBTL oder auch für Wismutcarboxylate wie z.B. Wismut-(III)-2-ethylhexanoat (K-Kat, King Industries, Norwalk, CT, USA) wie auch in WO 00/47642 beschrieben.

Darüber hinaus verfügen die meisten industriell verwendeten Polyolkomponenten für wässrige 2K-PUR Anwendungen über (mit tertiären Aminen neutralisierte) Carboxylgruppen, die zur Hydrophilierung des Bindemittels, d.h. der Einarbeitbarkeit der Polyolkomponente in Wasser dienen. Diese Carboxylgruppen können unter Umständen durch eine Komplexbildung zu einer Inhibierung der katalytischen Aktivität von zinnorganischen Verbindungen, die als Katalysatoren für 2K-wässrige Systeme eingesetzt werden, führen. Dies gilt für alle hochgeladenen Lewis-Säuren wie z.B. Titan-IV-, Zirkon-IV- etc. Verbindungen. Ein Katalysator, der universell verwendbar mit einer Vielzahl von hydrophilierten Polyisocyanaten und hydrophilierten Bindemitteln sein soll, darf diese Wechselwirkungen mit den Hydrophilierungsmitteln nicht zeigen.

Als Katalysatoren für 2K-wässrige Systeme sind in letzter Zeit Zinn und Zirkonverbindungen beschrieben worden. Zirkon-(IV)-acetylacetonat soll entsprechend der WO 98/41322 zu einer beschleunigten Aushärtung des 2-Komponenten Polyurethan-Lackfilms in wässrigen Systemen beitragen, ohne dass hierbei qualitativ schlechtere Lackfilme als im nicht katalysierten Fall hinsichtlich Glanz und Schleier erhalten würden. In der WO 98/41322 werden allerdings nur Beispiele von Lacksystemen gegeben, die auf konventionellen organischen Lösungsmitteln basieren. Beispiele für Lacke, die durch die Reaktion von hydrophilierten Bindemitteln (Polyolen) mit hydrophilierten Polyisocyanaten (also solchen, bei denen mit einer Wechselwirkung des Hydrophilierungsmittels mit dem Katalysator zu rechnen ist) erhalten werden, werden nicht aufgeführt. In der Lehre der WO 98/41322 ist weiterhin die Zugabe eines Komplexbildners (Acetylaceton) beschrieben, der nach Applizieren des Lackfilms erst abdampfen muss, um die Katalyse in Gang zu setzen. Dieses Vorgehen ist notwendig, um die Aktivität des Katalysators während der Topfzeit möglichst niedrig zu halten. Ohne Verwendung dieses Komplexbildners würde sich die Topfzeit auf ein nicht akzeptables und praxiswidriges Niveau verringern. Der Komplexbildner hat den Nachteil, dass er eine zusätzliche flüchtige organische Komponente darstellt, die zu erneuter Umweltbelastung führt und die Arbeitsbedingungen beim Anwender verschlechtert.

Es bestand also die Aufgabe, einen Katalysator für die Beschleunigung der Reaktion von Isocyanaten mit Alkoholen bzw. Polyolen in Gegenwart von Wasser bzw. generell zur Beschleunigung der Aushärtung von wässrigen 2K-PUR-basierten Systemen zu finden. Die allgemeinen Lackeigenschaften in Abhängigkeit der Verarbeitungszeit sollen nicht unter dem Einsatz des Katalysators leiden, und die Topfzeit soll nicht verkürzt werden. Idealerweise wird die Topfzeit durch die Anwesenheit des Katalysators nicht beeinflusst. Der Katalysator soll hydrolysestabil sein und bereits mit sehr geringen Wirkstoffmengen eine hinreichende Aktivität aufweisen. Weiterhin sind ökologische und ökonomische Gesichtspunkte (Preis) zu berücksichtigen.

Überraschenderweise wurde nun gefunden, dass mit Alkalimetallsalzen der Phosphormolybdänsäure wie beispielsweise Natriumphosphomolybdat (Na₃PO₄ * 12 MoO₃* x H₂O) diese Aufgabe gelöst werden kann.

Die Verbindung ist ein aktiver Katalysator für die Beschleunigung der Reaktion von Polyisocyanaten mit Polyolen in Wasser, ohne dabei die Verarbeitungszeit (Topfzeit) zu verkürzen. Weitere Additive wie z.B. Komplexbildner sind nicht notwendig. Dabei werden hochwertige Polyurethanlacke erhalten, die qualitativ den nicht unter Katalyse entstandenen Lackfilmen mindestens gleichwertig sind.

Wirkungen von Verbindungen des Molybdäns z.B. in der Oxidationsstufe 6 (z.B. Lithium- und Natriummolybdat) sind bereits früher in der US-A 2 916 464 beschrieben worden, allerdings wurden mit diesen Verbindungen Polyurethanschäume durch Reaktion eines Polyester-Polyols mit Toluendiisocyanat (TDI) in Gegenwart von Wasser hergestellt. Um so erstaunlicher ist es, dass mit Alkalimetallsalzen der Phosphormolybdänsäure, bevorzugt mit Natriumphosphomolybdat" hochwertige blasenfreie und lichtechte Lackfilme hergestellt werden können, die eben keine Schäume sind.

Es wurde nun festgestellt, dass sich die Aushärtezeit bzw. die Zeit, die ein fertig applizierte 2K-PUR-Wasser Lack bzw. eine Beschichtung benötigt, um seine Endeigenschaften zu erhalten (z.B. Pendelhärte, Trocknung), durch den Zusatz von Alkalimetallsalzen der Phosphormolybdänsäure, bevorzugt von Natriumphosphomolybdat, als Katalysator im Vergleich zum unkatalysierten Fall stark verkürzen lässt. Damit kann das beschichtete Gut wesentlich rascher genutzt werden.

Die Beschleunigung der Aushärtereaktion wird auch in pigmentierten Systemen wie z.B. Weiß- oder Rotlacken beobachtet (siehe Beispiele 2 und 3). Erforderlichenfalls muss die Menge an Katalysator erhöht werden.

Gegenstand der vorliegenden Erfindung sind damit Zweikomponenten Beschichtungssysteme auf Polyurethanbasis, dadurch gekennzeichnet, dass sie im wesentlichen enthalten
(a) Polyisocyanate, die gegebenenfalls hydrophiliert sind, gegebenenfalls in Gegenwart organischer Lösemittel oder Lösemittelgemische,
(b) Verbindungen mit gegenüber Isocyanaten reaktiven Gruppen, gegebenenfalls hydrophiliert, in Wasser und gegebenenfalls in Gegenwart organischer Lösemittel oder Lösemittelgemische,
(c) Alkalimetall-phosphomolybdate, bevorzugt Natriumphosphomolybdat,
(d) gegebenenfalls weitere Zusatzstoffe und Hilfsmittel,
wobei die Mengen von (a) + (b) von 20 bis 99,9999 Gew.-Teilen, (c) von 0,0001 bis 5 Gew.-Teilen, die Menge an (d) von 0 bis 75 Gew.-Teilen betragen, mit der Maßgabe, dass die Summe der Gewichtsteile der Einzelkomponenten (a) bis (d) 100 beträgt.

Bevorzugt handelt es sich bei den Zweikomponentensystemen auf Polyurethanbasis um wässrige Zweikomponenten-Lacksysteme oder Klebstoffsysteme, ganz besonders bevorzugt um Lacksysteme.

Gegenstand der Erfindung ist auch ein Verfahren zur Herstellung der Zweikomponenten-Polyurethansysteme der allgemeinen Zusammensetzung (a) bis (d), welches dadurch gekennzeichnet ist, dass die Reihenfolge der Zugabe der Komponenten des Lacksystems und der Hilfsstoffe (a) bis (d) beliebig variiert werden kann.

Ein weiterer Gegenstand der Erfindung ist die Verwendung der erfindungsgemäßen Zwei-komponenten-Polyurethansysteme zur Herstellung von Lacken, Farben und anderen Systemen wie Klebstoffen oder Elastomeren.

Gegenstand der Erfindung sind ferner mit den erfindungsgemäßen 2K-PUR Systemen beschichteten Substrate.

Unter Zweikomponentensystemen im Sinne der vorliegenden Erfindung versteht man Überzugsmittel, bei denen die Komponenten (a) und (b) aufgrund ihrer Reaktivität in getrennten Gefäßen gelagert werden müssen. Die beiden Komponenten werden erst kurz vor Applikation gemischt und reagieren dann im allgemeinen ohne zusätzliche Aktivierung.

Bei der (Poly)-isocyanatkomponente (a) handelt es sich um beliebige organische Polyisocyanate mit aliphatisch, cycloaliphatisch, araliphatisch und/oder aromatisch gebundenen, freien Isocyanatgruppen, die bei Raumtemperatur flüssig sind oder zu diesem Zweck mit Lösungsmitteln verdünnt sind. Die Polyisocyanatkomponente (a) weist bei 23°C eine Viskosität von 10 bis 15000, vorzugsweise 10 bis 5000 mPas auf. Besonders bevorzugt handelt es sich bei der Polyisocyanatkomponente (a) um Polyisocyanate oder Polyisocyanatgemische mit ausschließlich aliphatisch und/oder cycloaliphatisch gebundenen Isocyanatgruppen einer zwischen 2,0 und 5,0 liegenden (mittleren) NCO-Funktionalität und einer Viskosität bei 23°C von 10 bis 2000 mPas.

Bevorzugt werden als Vernetzer Polyisocyanate mit freien NCO-Gruppen eingesetzt, um aus den wässrigen Zweikomponenten-Polyurethanlacken ein besonders hohes lacktechnisches Niveau zu erhalten. Geeignet als solche Vernetzerharze sind beispielsweise Polyisocyanate auf Basis von Isophorondiisocyanat (IPDI), Hexamethylendiisocyanat (HDI), 1,4-Diisocyanatocyclohexan, Bis-(4-isocyanatocyclohexyl)-methan (Desmodur^{®} W, Bayer AG, Leverkusen), 1,3-Diisocyanatobenzol, 2,4- und/oder 2,6-Diisocyanatotoluol (TDI), Diisocyanatodiphenylmethan (MDI) sowie ω,ω'-Diisocyanato-1,3-dimethylcyclohexan (H₆XDI). Bevorzugt sind Polyisocyanate auf Basis von Isophorondiisocyanat, Hexamethylendiisocyanat, Bis-(4-isocyanatocyclohexyl)-methan und ω,ω'-Diisocyanato-1,3-dimethylcyclohexan (H₆XDI).

Die genannten Diisocyanate können gegebenenfalls als solche verwendet werden, in der Regel finden jedoch Derivate der Diisocyanate Verwendung. Als Derivate geeignet sind Polyisocyanate enthaltend Biuret-, Isocyanurat-, Uretdion-, Urethan-, Iminooxadiazindion-, Oxadiazintrione-, Carbodiimid-, Acylharnstoff und Allophanatgruppen.

Bevorzugte Derivate sind solche mit Isocyanurat, Iminooxadiazindion und Uretdion-Strukturen. Besonders bevorzugt sind monomerenarme Lackpolyisocyanate mit diesen Strukturelementen aus Isophorondiisocyanat (IPDI), Hexamethylendiisocyanat (HDI), 1,4-Diisocyanatocyclohexan, Bis-(4-isocyanatocyclohexyl)-methan (Desmodur^{®} W).

Geeignet sind auch Triisocyanate wie z.B. TIN (Triisocyanatononan).

Die (Poly)-isocyanatkomponente (a) kann gegebenenfalls hydrophil modifiziert sein. Wasserlösliche bzw. -dispergierbare Polyisocyanate sind z.B. durch Modifikation mit Carboxylat-, Sulfonat- und/oder Polyethylenoxidgruppen und/oder Polyethylenoxid/Polypropylenoxidgruppen erhältlich.

Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielweise in der EP-A 0 540 985, S. 3, Z 55 - S. 4 Z. 5 beschrieben. Gut geeignet sind auch die in der EP-A-0 959 087, S. 3 Z. 39-51 beschriebenen Allophanatgrupen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 10 007 821, S. 2 Z. 66 - S. 3 Z. 5, beschriebenen wasserdispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE-A 10 024 624, S. 3 Z. 13 - 33 oder auch in der WO 01/88006 beschrieben sind. Ebenso möglich ist die externe Hydrophilierung durch Zusatz von Emulgatoren.

Der NCO-Gehalt der verwendeten Polyisocyanatkomponente (a) kann z.B. bei sogenannten Polyether-Allophanaten (Hydrophilierung mittels eines Polyethers) von 5-25 Gew.-% reichen. Bei einer Hydrophilierung mit Sulfonsäuregruppen können NCO-Gehalte von 4-26 Gew.-% erreicht werden, wobei diese Zahlen nur beispielhaft zu verstehen sind.

Die eingesetzten Isocyanatkomponenten können auch teilweise, z.B. bis zu einem Drittel der vorhandenen Isocyanatgruppen mit gegenüber Isocyanaten reaktiven Komponenten blockiert sein. In diesem Fall kann es in einem späteren Schritt zu Reaktion der blockierten Isocyanatkomponente mit weiterem Polyol kommen, um eine weitere Vernetzung herbeizuführen.

Geeignete Blockierungsmittel für diese Polyisocyanate sind beispielsweise einwertige Alkohole wie Oxime wie Acetoxim, Methylethylketoxim, Cyclohexanonoxim, Lactame wie ε-Caprolactam, Phenole, Amine wie Diisopropylamin oder Dibutylamin, Dimethylpyrazol oder Triazol sowie Malonsäuredimethylester, Malonsäurediethylester oder Malonsäuredibutylester.

Bevorzugt ist der Einsatz niedrigviskoser, hydrophober oder hydrophilierter Polyisocyanate mit freien Isocyanatgruppen auf Basis aliphatischer, cycloaliphatischer, araliphatischer und/oder aromatischer Isocyanate, besonders bevorzugt aliphatischer oder cycloaliphatischer Isocyanate, da sich so ein besonders hohes Eigenschaftsniveau des Lackfilms erreichen lässt. Die Vorteile der erfindungsgemäßen Bindemittel-Dispersionen treten in Kombination mit diesen Vernetzern am deutlichsten zutage. Diese Polyisocyanate weisen bei 23°C im Allgemeinen eine Viskosität von 10 bis 3500 mPas auf. Falls erforderlich, können die Polyisocyanate in Abmischung mit geringen Mengen an inerten Lösemitteln zum Einsatz gelangen, um die Viskosität auf einen Wert innerhalb des genannten Bereiches abzusenken. Auch Triisocyanatononan kann allein oder in Mischungen als Vernetzerkomponente eingesetzt werden.

Prinzipiell ist natürlich auch der Einsatz von Mischungen verschiedener Polyisocyanate möglich.

Als Verbindungen mit gegenüber Isocyanaten reaktiven Gruppen (b) sind beispielweise Hydroxylgruppen, Sulfonat- und/oder Carboxylatgruppen, vorzugsweise Carboxylatgruppen und gegebenenfalls Sulfonsäure und/oder Carboxylgruppen, vorzugsweise Carboxylgruppen aufweisende Polymerisate von olefinisch ungesättigten Monomeren (sogenannte Polyacrylat-Polyole), von Kombinationen aus Diolen und Dicarbonsäuren (sogenannte Polyester-Polyole), von Kombinationen aus Diolen, Dicarbonsäuren und Diisocyanaten (sogenannte PolyurethanPolyole) und/oder von Hybridsystemen aus den genannten Polyolklassen, beispielweise Polyacrylat-Polyesterpolyole, Polyacrylat-Polyurethanpolyole, Polyester-Polyurethanpolyole oder Polyester-Polyurethanpolyole, die vorzugsweise ein nach der Gelpermeationschromatographie bestimmbares Molekulargewicht Mₙ (Zahlenmittel) von 500 bis 50000, insbesondere 1000 bis 10000, eine Hydroxylzahl von 16,5 bis 264, vorzugsweise 33 bis 165 mg KOH/g Festharz, eine Säurezahl (bezogen auf die nicht neutralisierten Sulfonsäure- und/oder Carboxylgruppen) von 0 bis 150, vorzugsweise 0 bis 100 mg KOH/g Festharz und ein Gehalt an Sulfonat- und/oder Carboxylgruppen von 5 bis 417, vorzugsweise 24 bis 278 Miliäquivalenten pro 100 g Feststoff aufweisen, geeignet.

Besonders bevorzugt handelt es sich bei diesen anionischen Gruppen um Carboxylatgruppen. Eine Übersicht über verschiedene Bindemittel wird z.B. in EP-A 0 959 115, S. 3 Z. 26 - 54 gegeben. Es können jedoch auch einfache Diolkomponenten verwendet werden. Prinzipiell sind als Bindemittelkomponente (b) alle in Wasser gelösten oder dispergierten Bindemittel, die gegenüber Isocyanaten reaktive Gruppen aufweisen, geeignet. Hierzu zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind. Bevorzugt sind jedoch Polyole, also Verbindungen mit freien OH-Gruppen.

Die Bindemittelkomponente (b) kommen bei der Herstellung der Beschichtungsmittel im allgemeinen in Form von 10- bis 60-, vorzugsweise 20- bis 50-gew.-%igen wässrigen Lösungen und/oder Dispersionen zum Einsatz, die im allgemeinen eine Viskosität von 10 bis 10⁵, vorzugsweise 100 bis 10000 mPa.s/23°C und pH-Werte von 5 bis 10, vorzugsweise 6 bis 9 aufweisen. Gegebenenfalls können Hilfslösungsmittel verwendet werden.

In Abhängigkeit vom Molekulargewicht der Bindemittelkomponente (b) und ihrem Gehalt an anionischen Gruppen bzw. an freien Säuregruppen, insbesondere Carboxylgruppen handelt es sich bei den wässrigen, die Polymerisate enthaltenden Systemen um echte Dispersionen, kolloiddisperse oder molekulardisperse Dispersionen, im allgemeinen jedoch um sogenannte "Teildispersionen", d.h. um wässrige Systeme, die zum Teil molekulardispers und zum Teil kolloiddispers sind.

Das Verhältnis von Isocyanatgruppen aus Komponente (a) zu isocyanatreaktiven Gruppen wie Hydroxylgruppen (NCO-OH Verhältnis) aus Komponente (b) kann einen weiten Bereich umfassen. So ist ein Verhältnis von 0,2:1,0 bis 4,0:1,0 für lacktechnische Anwendungen nutzbar. Bevorzugt ist ein Bereich von 0,35:1 bis 2,0:1,0, besonders bevorzugt 1,0:1,0 bis 1,5:1,0.

Die einzusetzenden Katalysatormengen für Alkalimetallsalze der Phosphormolybdänsäure liegen sehr niedrig. Generell kann mit einer Wirkstoffmenge von 1 bis 10000 ppm gearbeitet werden, bevorzugt ist ein Bereich von 1 bis 5000 ppm, besonders bevorzugt ist ein Bereich von 1 bis 1000 ppm, bezogen auf alle Komponenten (a) bis (d). Die Wirksamkeit des Katalysators ist unabhängig von der Art seiner Zugabe. Somit kann er direkt ins zugesetzte Wasser gegeben werden. Alternativ kann er auch in die Komponenten (a) und/oder (b) eingearbeitet werden.

Vor, während oder nach der Herstellung der erfindungsgemäßen wässrigen Bindemitteldispersion und auch im Fall der Herstellung der Beschichtungsmitteln durch Zugabe mindestens eines Vernetzers können die üblichen Hilfs- und Zusatzmittel der Lacktechnologie (d) zugesetzt werden, wie z.B. Entschäumungsmittel, Verdickungsmittel, Pigmente, Dispergierhilfsmittel, weitere von (c) verschiedene Katalysatoren, Hautverhinderungsmittel, Antiabsetzmittel oder Emulgatoren.

Die erfindungsgemäßen Zweikomponenten Polyurethansysteme enthalten als Lösungsmittel Wasser und gegebenenfalls organische Lösemittel oder deren Gemische.

Als organische Lösungsmittel können alle bekannten Lösemittel verwendet werden. Bevorzugt sind die in der Lackindustrie verwendeten Lösemittel wie Xylol, Butylacetat, Ethylacetat, Butylglykolacetat, Butoxyl, Methoxypropylacetat, Kohlenwasserstoffe wie Solvesso^{®} 100 (Exxon Mobile Chemicals) (alternativ kann auch Sovent Naphta verwendet werden) oder N-Methylpyrrolidon.

Die organischen Lösemittel kommen, wenn überhaupt, in der Regel nur in den gerade notwendigen Mengen zum Einsatz. So zum Beispiel zum Vorverdünnen der eingesetzten Polyisocyanate (a) oder in der zur Herstellung der in Wasser gelösten oder dispergierten Bindemittelkomponente (b) gerade benötigten Menge.

Die Herstellung der Lacke, Farben und anderen Formulierungen aus den erfindungsgemäßen Zweikomponenten-Polyurethansysteme erfolgt nach an sich bekannten Methoden. Aufgrund der Beschaffenheit der eingesetzten Polyisocyantkomponente (a) und der Bindemittelkomponente (b) ist ein einfaches Zusammengeben der Komponenten unter weiterer Verwendung von Komponente (c) und (d) und anschließendes Verrühren bzw. Durchmischen prinzipiell für die Herstellung der Lackmischung geeignet. Je nach eingesetzten Rohstoffen kann z.B. ein Dissolver zur Vermischung bei höheren Umrührgeschwindigkeiten (z.B. bei 2000 U/Min. eingesetzt werden). In einer großen Zahl der Anwendungsfälle wird ein einfaches Umrühren z.B. mit einem Stab für die Durchmischung ausreichend sein. Unabhängig von der gewählten Herstellmethode enthalten die erfmdungsgemäßen wässrigen 2-Komponeneten Polyurethansysteme die vorstehend beschriebenen Einzelkomponenten (a) bis (d),wobei die Mengen von (a) + (b) von 20 bis 99,9999 Gew.-Teile, (c) von 0,0001 bis 5 Gew.-Teile und die Menge an (d) 0 bis 75 Gewichtsteile betragen kann mit der Maßgabe, dass die Summe der Gewichtsteile der Einzelkomponenten (a) bis (d) 100 Gewichtsteile beträgt.

Die so erhaltenen wässrigen Beschichtungsmittel eignen sich für alle Einsatzgebiete, in denen wässrige Anstrich- und Beschichtungssysteme mit hohen Anforderungen an das Eigenschaftsniveau der Filme Verwendung finden, z.B. Beschichtung mineralischer Baustoff-Oberflächen, Lackierung und Versiegelung von Holz und Holzwerkstoffen, Beschichtung metallischer Oberflächen (Metallbeschichtung), Beschichtung und Lackierung asphalt- oder bitumenhaltiger Beläge, Lackierung und Versiegelung diverser Kunststoffoberflächen (Kunststoffbeschichtung) sowie Hochglanzlacke und Hochglanzdecklacke.

Die wässrigen Beschichtungsmittel, enthaltend die Bindemitteldispersionen, werden zur Herstellung von Grundierungen, Füller, pigmentierte Decklacke und Klarlacke, sowie Einschichtlacke, die in der Einzel- und Serienapplikation, z.B. im Bereich der Industrielackierung, Automobil-Erst- und -Reparaturlackierung, Anwendung finden können, verwendet.

Bevorzugte Verwendungen der erfmdungsgemäßen wässrigen Beschichtungen ist die Beschichtung bzw. Lackierung metallischer Oberflächen oder Kunststoffen oder von Böden bei den üblichen Verarbeitungstemperaturen, vorzugsweise bei Raumtemperatur bis 140°C. Diese Beschichtungen weisen bei sehr guter Filmoptik eine schnelle Trocknung sowie ein schnelles Erreichen der Endeigenschaften der Filme auf, bei gleichzeitig hohem Niveau an Lösemittel- und Chemikalienbeständigkeit.

Die Herstellung der Beschichtung kann nach den unterschiedlichsten Spritzverfahren wie beispielweise Luftdruck-, HVLP-, Airless-, Airmix- oder Elektrostatik-Spritzverfahren erfolgen. Die Lacke und Beschichtungsmittel, enthaltend die erfindungsgemäßen Katalysatoren, können jedoch auch nach anderen Methoden, beispielweise durch Streichen, Rollen oder Rakeln appliziert werden.

Wie gezeigt werden konnte lassen sich unter Zuhilfenahme von Natriumphosphomolybdat die Endeigenschaften der untersuchten Lacke bzw. Beschichtungen deutlich rascher einstellen als im nicht katalysierten Fall. Die Beschleunigung der Aushärtung bezieht sich nicht nur auf Klarlacke, sondern auch auf (pigmentierte) Decklacke, wässrige Füller, Grundierungen sowie weitere Beschichtungen wie z.B. hochgefüllte Bodenbeschichtungen. Auch im Fall einer Pigmentierung des Decklacks ergibt sich noch eine deutliche Beschleunigung der Aushärtung des Lacks.

Im folgenden soll mit Beispielen die Wirksamkeit der beschriebenen Katalysatoren demonstriert werden.

### Beispiele

Im Rahmen der Untersuchungen der Wirksamkeit der Katalysatoren für wässrige 2-Komponenten Polyurethan Lack-Systeme wurde die Entwicklung der Härte (Pendelhärte) der Lackfilme nach König/DIN 53157 in Abhängigkeit von der Aushärtezeit bestimmt. Weiterhin wurde die Chemikalien/Lösungsmittelbeständigkeit der Lackfilme und ihr Glanz untersucht. Die Beispiele zeigen deutlich die Beschleunigung der Aushärtung durch Zunahme der Pendelhärte der Lackfilme.

Eingesetzte Polyisocyanatkomponente (a):
- (a1): Bayhydur^{®} VP LS 2319, Hexamethylendiisocyanat Trimerisat, das durch einen Polyetherrest hydrophiliert ist, NCO-Gehalt 18.0 +/- 0,5 Gew.-% Viskosität bei 23°C ca. 4.500 mPas, Bayer AG, Leverkusen. Die Herstellung erfolgt wie in EP-A 0 959 087 beschrieben.
- (a2): Desmodur^{®} XP 2410, nicht hydrophiliertes Polyisocyanat auf der Basis eines Hexamethylendiisocyanat Trimers, NCO-Gehalt 23 Gew.-%, Viskosität bei Raumtemperatur ca. 700 mPas, Bayer AG, Leverkusen. Die Herstellung erfolgt wie in DE-A 19 611 849 (z.B. Beispiele 4 und 5) und DE-A 19 824 485 (z.B. Beispiel 3) beschrieben.
- (a3): Bayhydur^{®} XP 2451 (hydrophiliertes Hexamethylendiisocyanat Tri- und Dimerisations- produkt, Bayer AG, Leverkusen). Viskosität: 1400 mPas, NCO-Gehalt 18,8 Gew.-%.

Eingesetzte Polyolkomponente (b):
- (b1): Bayhydrol^{®} VP LS 2235-1, OH-Gehalt des Festharzes: 3,3 Gew.-%, Polyacrylat-Polyol, Bayer AG, Leverkusen. Das Polyol ist in Wasser dispergiert und weist zur Hydrophilie- rung Carboxylgruppen auf.
- (b2): PUR-PAC-Polyol. Hybridbindemittel aus Polyurethan (Die PUR-PAC Dispersion wird erhalten aus einer Polyurethan-Dispersion (hydrophiliert mit Hydroxycarbonsäure, nach Zugabe eines Diisocyanats unter Bildung eines Präpolymers, anschließender Dispergierung in Wasser und Kettenverlängerung durch Zugabe eines Diamins) durch Polymerisation eines Acrylats in der PUR-Dispersion). Laborprodukt RSC 1392, Bayer AG, Leverkusen. Herstellungsvorschrift: 99,2 g eines Polyesters, hergestellt aus 47 Teilen Hexahydrophthalsäureanhydrid und 53 Teilen 1,6-Hexandiol, mit einer OH-Zahl von 53 und einer Säurezahl unter 3 werden zusammen mit 9,6 g 1,4-Butandiol und 0,2 g Zinn-(II)-octoat auf 80°C erhitzt und bei dieser Temperatur gehalten, bis eine homogene Lösung vorliegt. Anschließend werden 31,2 g Desmodur^{®} W (Bayer AG, Leverkusen, DE) innerhalb von 2 Minuten unter Rühren zugegeben, das Reaktionsgemisch auf 140°C aufgeheizt und 2 h bei 140°C gerührt. Das Prepolymer wird durch Zugabe von 46,7 g Propylenglykol-n-butylether gelöst und weitere 10 Minuten gerührt. Innerhalb von 2 h wird eine Lösung aus 105,2 g Hydroxypropylacrylat 41,2g Styrol und 16,8 g 2-Ethylhexylacrylat zudosiert. Parallel hierzu tropft man innerhalb von 3,5 h eine Lösung aus 24,0 g Di-tert.-butylperoxid und 24,0 g Propylenglykol-n-butylether zu. Nach Beendigung des Zulaufs von Lösung 1 dosiert man direkt innerhalb von 1 h eine Mischung aus 38,8 g Hydroxypropylmethacrylat, 19,6 g n-Butylacrylat, 8,6 g Styrol und 5,0 g Acrylsäure zu.

Im Anschluss an die Zugabe von Lösung 2 wird das Reaktionsgemisch noch weitere 2 h bei 140°C gerührt, anschließend auf 100°C abgekühlt, mit 6,5 g Dimethylethanolamin versetzt und 10 min homogenisiert. Durch Zugabe von 529,3 g Wasser innerhalb von 5 Minuten erfolgt die Dispergierung. Man erhält eine 39,3 Gew.-%ige Dispersion mit einem OH-Gehalt von 4,5 Gew.-% bzgl. Festharz, deren Partikel eine mittlere Teilchengröße von 173,3 nm aufweisen. Das Hybridharz hat ein mittleres Molgewicht M_{w} von 21382 g/mol.
- (b3): Hydrophiliertes Polyester-Polyol. Es handelt sich um das Laborprodukt WPC 19004, Bayer AG, Leverkusen.

Herstellung eines wasserverdünnbaren Polyesterpolyols: 334 g Neopentylglykol, 638 g 1,4-Cyclohexandimethanol, 733 g Trimellitsäureanhydrid und 432 g ε-Caprolactam werden zusammen in einen Reaktor, der mit Rührer, Heizung, automatischer Temperatursteuerung, Stickstoffeinleitung, Kolonne, Wasserabscheider und Vorlage ausgerüstet ist, eingewogen und unter Rühren und Durchleiten von Stickstoff so auf 230°C aufgeheizt, dass die Kopftemperatur an der Kolonne 103°C nicht übersteigt. Dabei scheidet sich das Reaktionswasser ab. Es wird bis zu einer Säurezahl von ≤ 5 mg KOH/g kondensiert. Dann wird auf 150°C abgekühlt und es werden 870 g Neopentylglykol, 827 g Trimethylolpropan und 1874 g Phthalsäureanhydrid zugegeben. Anschließend wird unter Rühren und Durchleiten von Stickstoff so auf 220°C aufgeheizt, dass die Kopftemperatur an der Kolonne 103°C nicht übersteigt. Dabei scheidet sich weiter Reaktionswasser ab. Nach beendeter Destillation wird der Wasserabscheider durch eine Destillationsbrücke ersetzt und so lange bei 220°C gerührt, bis die Kopftemperatur der Kolonne auf unter 90°C sinkt. Die Kolonne wird entfernt und mit erhöhtem Stickstoffstrom bis zu einer Säurezahl von ≤ 5 mg KOH/g kondensiert. Danach wird auf 140°C abgekühlt, 418 g Trimellitsäureanhydrid zugegeben und bei 170°C so lange gerührt, bis eine Säurezahl von ca. 35 mg KOH/g erreicht ist. Bis zu diesem Zeitpunkt der Herstellung des Polyesters wurden durch Ziehen von Proben und weiteren Entnahmen insgesamt ca. 1770 g Polyesterharz entnommen. Danach wird auf 130°C abgekühlt, 210 g Dipropylenglykoldimethylether zugegeben und 1 Stunde bei 100°C eingelöst. Dann wird diese entstandene Lösung in eine auf 50°C erwärmte Mischung aus 134 g N,N-Dimethylethanolamin und 3174 g deionisiertem Wasser innerhalb 1 Stunde bei 50°C eingerührt. Das resultierende Produkt wurde mit weiterem Wasser auf einen Festgehalt von ca. 47 Gew.-% eingestellt. Es entstand eine bläulich schimmernde, opake Dispersion mit einem Festgehalt von 46,7 Gew.-% an Polyesterpolyol (gemessen als nicht flüchtiger Anteil an einer Probe in einem Umluftofen für 60 min. bei 125°C), einer Säurezahl von 16,3 mg KOH/g (bezogen auf Lieferform), einer OH-Zahl von 116 mg KOH/g (bezogen auf Festharz) und einer Viskosität von 2306 mPa·s bei 23°C. Die Dispersion enthält ca. 2,4 Gew.-% Dipropylenglykoldimethylether, ca. 1,7 Gew.-% N,N-Dimethylethanol-amin und ca. 49,2 Gew.-% Wasser. Das Produkt ist weiter mit Wasser verdünnbar und zum Einsatz in wässrigen Zweikomponenten-Polyurethanlacken geeignet.
- (b4): Bayhydrol^{®} XP 2457 (Anionisches Polyacrylat-Polyol, wasserdispergierbar, Bayer AG, Leverkusen): Viskosität: 20-200 mPas, OH-Gehalt 0,8 Gew.%.

Eingesetzte Katalysatorkomponente (c) Natriumphosphomolybdat

Natriumphosphomolybdat (c) wurde von den Firma Aldrich, Taufkirchen, DE ohne weitere Modifikation in einer 10%igen wässrigen Lösung eingesetzt.

Die genannten Prozentangaben bzw. Teile bei den eingesetzten Rohstoffen verstehen sich als Gew.- % bzw. Gew.-Teile.

### Beispiel 1

Einfluss von Natriumphosphomolybdat auf das Aushärteverhalten eines wässrigen 2K-PUR Klarlacks

**Tabelle 1: Formulierung eines wässrigen 2K-PUR Klarlackes**

| **Komponente 1** | **Gew.-Teile** |
|---|---|
| Polyolkomponente (b1): | 400,0 |
| Bayhydrol^{®} VP LS 2235 | |
| Surfynol^{®} 104¹ | 9,1 |
| Borchigel^{®} PW 25² | 1,2 |
| Baysilone^{®} VP AI 3468³ | 7,6 |
| Gesamt Komp.1 | 417,9 |
| | |
| **Komponente 2** | |
| Polyisocyanatkomponente (a1): | |
| Bayhydur^{®} VP LS 2319 (80 Gew.%ig in Methoxybutylacetat) | 152,9 |
| Gesamt Komp.1 + Komp.2 | 570,8 |
| MV Komp.1 + Komp.2 | 100:36,6 |
| H₂O 25 sec. DIN 4 auf 100,0 g | 45,6 |

| | |
|---|---|
| MV = Massenverhältnis 1) Air Products N.L., Additiv zur Verbesserung von Verlauf, Untergrundbenetzung, Entschäumung; 2) Borchers GmbH, Monheim, PUR-Verdicker, 3) Borchers GmbH, Monheim, Slip-Additiv | |

Natriumphosphomolybdat wurde ohne weitere Modifikation in einer 10%igen wässrigen Lösung eingesetzt. Sämtliche Komponenten des Stammlackes (Komponente 1) wurden miteinander vermischt und entgast. Anschließend wurden die Lackkomponenten (Komponente 1 und 2) mittels eines Dissolvers bei 2000 U/Min. für 2 Minuten vermischt. Der Katalysator wurde vor der Applikation zur fertigen Lackmischung hinzugegeben und dann wie oben beschrieben mechanisch eingearbeitet. Der Lackfilm wurde auf eine Glasplatte mit einem Rakel aufgerakelt.

Nach dem Aushärten wird die Pendelhärte des Lacksystems bestimmt (Dämpfung eines Pendels durch die Lackoberfläche; je höher der Wert, desto besser und desto ausgehärteter der Lackfilm).

| **Pendelhärte** | **Probe A** | **Probe B** |
|---|---|---|
| | **(unkatalysiert), Vergleich** | **(Molybdophosphat-katalysiert), erfindungsgemäß** |
| **22,2 °C/52,0% Sofort** | **34"** | **91"** |
| **22,9 °C/52 % 1d RT** | **97"** | **98"** |

Es zeigte sich, dass durch das erfindungsgemäße System eine erheblich verbesserte Anfangshärte erzielt werden konnte. Die Topfzeit wurde dabei nicht reduziert.

### Probe A:

| **Komponenten** | **Gew.-Teile** |
|---|---|
| **Polyacrylatvorstufe¹** | **2100** |
| **Cosolventien^{2,3}** | **961** |
| **Initiator⁴** | **199** |
| **Methylmethacrylat** | **1647** |
| **Hydroxyethylmethacrylat** | **2804** |
| **n-Butylmethacrylat** | **1448** |
| **n-Butylacrylat** | **751** |
| **Isobornylmethacrylat** | **1784** |
| **Acrylsäure** | **306** |
| **VE-Wasser** | |

| | |
|---|---|
| ¹⁾ Desmophen A 160 60%-ig in SN 100 ²⁾ Dow, Dowanol PnB (Propylenglykol-n-buthylether) ²⁾ und 3) im Verhältnis 4,5 : 1 ³⁾ Solvent Naphta 100 ⁴⁾ Peroxan DB | |

### Probe B

| | **Probe A) Vergleich** | **Probe B) Erfindungsgemäß, mit Molybdat** |
|---|---|---|
| **Komponenten** | **Gew.-Teile** | **Gew.-Teile** |
| **Probe A** | **774** | **774** |
| **Amin^{1,2}** | **38,6** | **38,6** |
| **VE Wasser** | **541** | |
| **VE Wasser mit 1000 ppm Phosphormolybdänsäure Natriumsalz-Hydrat** | | **541** |

| | | |
|---|---|---|
| ¹⁾ Triethanolamin ²⁾ Dimethylethanolamin ^{1) und 2)} im Verhältnis 5 : 1 | | |

## Patentansprüche

1. Zweikomponenten Beschichtungssysteme auf Polyurethanbasis **dadurch gekennzeichnet, dass** sie im wesentlichen enthalten
(a) Polyisocyanate, die gegebenenfalls hydrophiliert sind,
(b) Verbindungen mit gegenüber Isocyanaten reaktiven Gruppen, gegebenenfalls hydrophiliert, in Wasser und gegebenenfalls in Gegenwart organischer Lösemittel oder Lösemittelgemische,
(c) Alkalimetallsalze der Phosphormolybdänsäure,
(d) gegebenenfalls weitere Zusatzstoffe und Hilfsmittel,
wobei die Mengen an (a) + (b) 20 bis 99,9999 Gew.-Teile, (c) 0,0001 bis 5 Gew.-Teile und (d) 0 bis 75 Gew.-Teile betragen und die Summe der Gew.-Teile 100 beträgt.

2. Systeme gemäß Anspruch 1, **dadurch gekennzeichnet, dass** es sich um Lacksysteme handelt.

3. Systeme gemäß Anspruch 1 oder 2, **dadurch gekennzeichnet, dass** als Komponente (c) Natriumphosphomolybdat verwendet wird.

4. Systeme gemäß Anspruch 1, **dadurch gekennzeichnet, dass** es sich um Klebstoffsysteme handelt.

5. Systeme gemäß Anspruch 1, **dadurch gekennzeichnet, dass** als Polyisocyanate (a) solche mit aliphatisch gebundenen Isocyanatgruppen verwendet werden.

6. Systeme gemäß Ansprüchen 1 bis 5, **dadurch gekennzeichnet, dass** als Polyisocyanate (a) blockierte Polyisocyanate mit aromatisch gebundenen Isocyanatgruppen verwendet werden.

7. Systeme gemäß Ansprüchen 1 bis 6, **dadurch gekennzeichnet, dass** als Polyisocyanate (a) solche auf Basis von Hexamethylendiisocyanat, Isophorondiisocyanat, 4,4'Diisocyanatodicyclohexylmethan eingesetzt werden.

8. Systeme gemäß Ansprüchen 1 bis 7, **dadurch gekennzeichnet, dass** die Polyisocyanate (a) hydrophil modifiziert sind.

9. Verfahren zur Herstellung von Systemen gemäß Ansprüchen 1 bis 8, **dadurch gekennzeichnet, dass** die Komponente (c) bei der Herstellung der Komponenten (a) oder (b) in die jeweilige Komponente eingebracht wird.

10. Verfahren zur Herstellung von Systemen gemäß Ansprüchen 1 bis 8, **dadurch gekennzeichnet, dass** die Komponente (c) bei der Herstellung des anwendungsfertigen Systems in die Mischung eingebracht wird.

11. Verfahren zur Herstellung von Systemen gemäß Ansprüchen 1 bis 8, **dadurch gekennzeichnet, dass** die Komponente (c) zu einer oder mehreren der übrigen Komponenten vor der Zugabe zusätzlichen Wassers oder Lösungsmittels zugegeben werden.

12. Verwendung der Systeme gemäß Ansprüchen 1 bis 8 zur Herstellung von Lacken, Farben, Dichtstoffen und Klebstoffen.

13. Mit Systemen nach Ansprüchen 1 bis 8 beschichtete, abgedichtete oder verklebte Substrate.
